# EUROPÄISCHE PATENTANMELDUNG

(11) **EP 2 107 579 A2**
(43) Veröffentlichungstag der Anmeldung: **07.10.2009**
(21) Anmeldenummer: 09156010.2
(22) Anmeldetag: 24.03.2009
(51) Int. Cl.: H01H 9/02, H01H 31/12

(54) **Isolieraufsatz und Isoliergehäuse**

(30) Priorität: 04.04.2008 DE 102008017987
(71) Anmelder: Siemens Aktiengesellschaft, 80333 München (DE)
(72) Erfinder: Bernhard, Konstantin, 12623, Berlin (DE); Kleinig, Bettina, 13158, Berlin (DE); Kühn, Wolfgang, 12623, Berlin (DE)

(57) **Zusammenfassung**

Die Erfindung betrifft einen Isolieraufsatz (1) zum Isolieren eines Kontaktarms (24) eines Schaltgeräts. Dieser Isolieraufsatz weist eine Durchgangsöffnung (7) zur Aufnahme des Kontaktarms (24) und die Durchgangsöffnung umlaufende, in sich geschlossene Isolierstege (9) auf, zwischen denen eine umlaufende Nut (10) angeordnet ist. Die Isolierstege (9) des Isolieraufsatzes sind ausgebildet zum Eingreifen in mindestens eine Nut (28) eines Isoliergehäuses (20) derart, dass zwischen dem Isolieraufsatz (1) und dem Isoliergehäuse (20) eine Fuge mit mäanderförmigem Querschnitt gebildet wird. Weiterhin betrifft die Erfindung ein Isoliergehäuse.

## Beschreibung

Die Erfindung betrifft einen Isolieraufsatz zum Isolieren eines Kontaktarms eines Schaltgerätes sowie ein Isoliergehäuse.

An Kontaktarmen von Schaltgeräten liegen oftmals hohe zu schaltende Spannungen an, also beispielsweise bei Mittelspannungsschaltanlagen Spannungen zwischen 1 kV und 24 kV. Daher müssen solche Kontaktarme gegenüber der Umgebung und gegeneinander elektrisch isoliert werden. Dazu sind allgemein Isolieraufsätze bekannt, die beispielsweise als rohrförmige Aufsätze oder auch als Isolierschläuche ausgebildet sein können, welche auf den zu isolierenden Kontaktarm aufgeschoben werden.

Ein besonderes Problem ist dabei die dielektrisch feste Verbindung von solchen Isolieraufsätzen mit den Isoliergehäusen von Schaltgeräten. An der Übergangsstelle zwischen Isolieraufsatz und Isoliergehäuse besteht nämlich bei hohen zu isolierenden Spannungen die Gefahr eines elektrischen Durchschlags oder Überschlags. Zur Vermeidung eines derartigen Durchschlags oder Überschlags ist es denkbar, zwischen dem Isolieraufsatz und dem Isoliergehäuse eine sogenannte elektrische Edelfuge auszubilden. Unter einer solchen Edelfuge ist eine äußerst exakt gearbeitete Grenzfläche zwischen zwei sich berührenden Materialien (hier zwischen dem Material des Isolieraufsatzes und dem Material des Isoliergehäuses) zu verstehen, bei der nahezu keine Fremdmaterialien (wie Schmutz, Luft oder ähnliches) zwischen den Berührungsflächen vorhanden sind und sich die zu verbindenden Materialien so exakt berühren, dass nach außen hin die Wirkung entsteht, als ob die Materialien stoffschlüssig ineinander übergehen. Eine derartige Edelfuge könnte beispielsweise durch eine sehr exakte Klebung oder Pressung realisiert werden. Jedoch ist das Herstellen einer solchen Edelfuge sehr aufwendig und damit kostenintensiv.

Der Erfindung liegt die Aufgabe zugrunde, einen Isolieraufsatz und ein Isoliergehäuse anzugeben, welche einfach und kostengünstig miteinander verbunden werden können und dennoch eine hohe elektrische Durchschlags- bzw. Überschlagsfestigkeit an der Verbindungsstelle aufweisen.

Diese Aufgabe wird erfindungsgemäß gelöst durch einen Isolieraufsatz zum Isolieren eines Kontaktarms eines Schaltgeräts, der eine Durchgangsöffnung zur Aufnahme des Kontaktarms und die Durchgangsöffnung umlaufende, in sich geschlossene Isolierstege aufweist, zwischen denen eine umlaufende Nut angeordnet ist, wobei die Isolierstege des Isolieraufsatzes ausgebildet sind zum Eingreifen in mindestens eine Nut eines Isoliergehäuses derart, dass zwischen dem Isolieraufsatz und dem Isoliergehäuse eine Fuge mit mäanderförmigem Querschnitt gebildet wird.

Hierbei ist besonders vorteilhaft, dass die Isolierstege um die Durchgangsöffnung umlaufen und in sich geschlossen sind sowie dass die zwischen den Isolierstegen angeordnete Nut ununterbrochen um die Durchgangsöffnung umlaufend ist. Dadurch ergibt sich beim Eingreifen der Isolierstege in eine Nut eines Isoliergehäuses eine Fuge zwischen dem Isolieraufsatz und dem Isoliergehäuse, welche einen mäanderförmigen Querschnitt aufweist. Aufgrund dieses mäanderförmigen Querschnittes ergibt sich für einen eventuellen Überschlag eine deutlich verlängerte Luftstrecke in Vergleich zu einer Fuge mit einem nicht mäanderförmigen, sondern im Wesentlichen geradlinigen Querschnitt. Daher kommt es bei Fugen mit mäanderförmigem Querschnitt erst bei sehr viel höheren Spannungen zu einem Durchschlag durch die Fuge, so dass der Isolieraufsatz und das Isoliergehäuse auch bei vergleichsweise hohen Spannungen den Kontaktarm zuverlässig isolieren.

Weiterhin ist dabei vorteilhaft, dass die Fuge gröber toleriert, luftdurchsetzt bzw. luftspaltbehaftet sein darf, und daher der Isolieraufsatz und das Isoliergehäuse nicht übermäßig exakt gefertigt zu sein brauchen. Dadurch können der Isolieraufsatz und das Isoliergehäuse vergleichsweise einfach hergestellt (beispielsweise gegossen, gespritzt oder gepresst) und damit kostengünstig hergestellt sein.

Der Isolieraufsatz kann so ausgestaltet sein, dass die Nut des Isolieraufsatzes ausgebildet ist zur Aufnahme eines Isoliersteges des Isoliergehäuses. Die Innenabmessungen der Nut des Isolieraufsatzes sind also so zu wählen, dass die Nut den Isoliersteg des Isoliergehäuses aufnehmen kann. Wie oben erwähnt, ist dabei die Ausbildung eines Luftspalts zwischen Isolieraufsatz und Isoliergehäuse unschädlich.

Der Isolieraufsatz kann so ausgebildet sein, dass die Isolierstege des Isolieraufsatzes komplementär ausgebildet sind zur Nut bzw. zu Nuten des Isoliergehäuses. Die Außenabmessungen der Isolierstege sind also so zu wählen, dass diese in die Nut des Isoliergehäuses eingeführt werden können.

Der Isolieraufsatz kann auch so realisiert sein, dass dieser einstückig ausgebildet ist und aus einem elektrisch isolierenden Kunststoff besteht. Ein derartiger Isolieraufsatz lässt sich einfach und kostengünstig z. B. durch Gießen oder Pressen herstellen.

Der Isolieraufsatz kann so gestaltet sein, dass die Isolierstege des Isolieraufsatzes zwei halbkreisförmige Isolierstegabschnitte und zwei gerade Isolierstegabschnitte aufweisen, wobei die geraden Isolierstegabschnitte die halbkreisförmigen Isolierstegabschnitte miteinander verbinden, und der Abstand der Mitte der Durchgangsöffnung zu einem der halbkreisförmigen Isolierstegabschnitte kleiner ist als der Abstand der Mitte der Durchgangsöffnung zu dem anderen halbkreisförmigen Isolierstegabschnitt. Dabei ist also die Durchgangsöffnung nicht im Zentrum der in sich geschlossenen Isolierstege des Isolieraufsatzes angeordnet, vielmehr ist die Durchgangsöffnung in Richtung einer er halbkreisförmigen Isolierstegabschnitte verschoben. Dies ermöglicht vorteilhafterweise einen universellen Einsatz des Isolieraufsatzes: Wenn der Isolieraufsatz um 180° um seine Achse verdreht auf ein Isoliergehäuse aufgesetzt wird, dann befindet sich die Durchgangsöffnung an einer anderen Stelle als bei nicht verdrehtem Aufsetzen des Aufsatzes. Somit kann ein und derselbe Isolieraufsatz wahlweise angewendet werden für das Isolieren von Kontaktarmen, welche an zwei verschiedenen Stellen bezüglich der Nut des Isoliergehäuses diese Isoliergehäuse verlassen. Durch diesen universellen Einsatz sind höhere Produktionsstückzahlen und niedrigerer Logistikaufwand zu erreichen, wodurch sich eine kostengünstige Lösung ergibt.

Der Isolieraufsatz kann auch so ausgebildet sein, dass dieser ein Rastelement zum lösbaren Verbinden des Isolieraufsatzes mit dem Isoliergehäuse aufweist. Dieses Rastelement ermöglicht ein einfaches und schnelles Verbinden des Isolieraufsatzes mit dem Isoliergehäuse und darüber hinaus ein ebenso einfaches und kostengünstiges Lösen des Isolieraufsatzes vom Isoliergehäuse bei Reparatur oder Falschmontage.

Der Isolieraufsatz kann dabei so gestaltet sein, dass dieser ein die Durchgangsöffnung umgebendes Isolierrohr und eine an einem Ende (genauer gesagt an einer Stirnfläche) des Isolierrohrs angeordnete, die Isolierstege tragende Platte aufweist.

Die oben genannte Aufgabe wird ebenfalls gelöst durch ein Isoliergehäuse mit einer Durchgangsöffnung zur Aufnahme eines Kontaktarms und mit einem die Durchgangsöffnung umlaufenden, in sich geschlossenen Isoliersteg, an den beidseitig umlaufende Nuten angrenzen, wobei der Isoliersteg des Isoliergehäuses ausgebildet ist zum Eingreifen in eine Nut eines Isolieraufsatzes derart, dass zwischen dem Isoliergehäuse und dem Isolieraufsatz eine Fuge mit mäanderförmigem Querschnitt gebildet wird. Bei diesem Isoliergehäuse ist vorteilhaft der die Durchgangsöffnung umlaufende, ununterbrochene und in sich geschlossene Isoliersteg, welcher beidseitig von Nuten begrenzt wird, welche ebenfalls um die Durchgangsöffnung verlaufen. Durch diese Ausgestaltung wird ermöglicht, dass bei Verbinden des Isoliergehäuses mit dem Isolieraufsatz bei Eingreifen des Isoliersteges des Isoliergehäuses in die Nut des Isolieraufsatzes zwischen dem Isoliergehäuse und dem Isolieraufsatz eine Fuge mit mäanderförmigem Querschnitt gebildet wird. Wie oben beim Isolieraufsatz erläutert, ergibt sich dadurch eine erhebliche Verlängerung der Luftstrecke, so dass auch bei hohen Spannungen die Gefahr eines elektrischen Durchschlages oder Überschlags durch die Fuge vermieden wird.

Das Isoliergehäuse kann so ausgebildet sein, dass die Nuten des Isoliergehäuses ausgebildet sind zur Aufnahme von Isolierstegen des Isolieraufsatzes.

Ebenso kann der Isoliersteg des Isoliergehäuses komplementär ausgebildet zur Nut des Isolieraufsatzes sein.

Ähnlich dem Isolieraufsatz kann das Isoliergehäuse so ausgestaltet sein, dass der Isoliersteg des Isoliergehäuse zwei halbkreisförmige Isolierstegabschnitte und zwei gerade Isolierstegabschnitte aufweist, wobei die geraden Isolierstegabschnitte die halbkreisförmigen Isolierstegabschnitte miteinander verbinden, und der Abstand der Mitte der Durchgangsöffnung zu einem der halbkreisförmigen Isolierstegabschnitte kleiner ist als der Abstand der Mitte der Durchgangsöffnung zu dem anderen halbkreisförmigen Isolierstegabschnitt.

Die oben genannte Aufgabe wird ebenfalls gelöst durch eine Anordnung mit einem Isolieraufsatz der oben beschriebenen Art und einem Isoliergehäuse der beschriebenen Art.

Die Erfindung wird im Folgenden anhand von Ausführungsbeispielen näher erläutert. Dazu ist in
- Figur 1: eine dreidimensionale Ansicht eines Isolieraufsatzes, in
- Figur 2: ein Schnitt durch diesen Isolieraufsatz, in
- Figur 3: eine teilweise Schnittansicht eines Isoliergehäuses, in
- Figur 4: eine Schnittansicht eines weiteren Isoliergehäuses, in
- Figur 5: eine Darstellung eines Isoliergehäuses mit aufgesetztem Isolieraufsatz, in
- Figur 6: ein Detail der Figur 5 sowie in
- Figur 7: ein Schaltgerät mit teilweise dargestelltem Isoliergehäuse und Isolieraufsatz dargestellt.

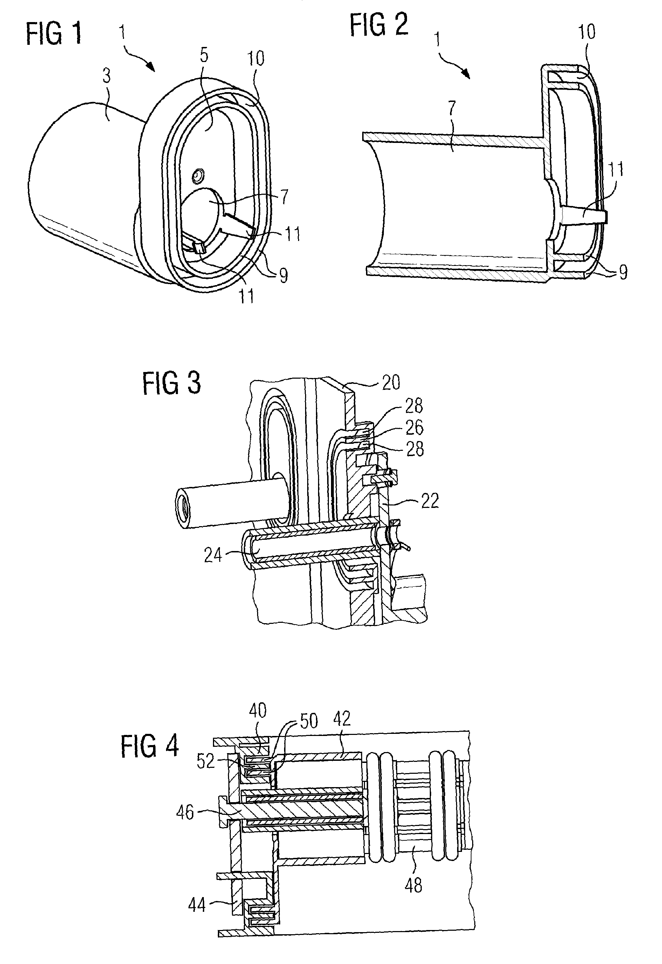

Figur 1 zeigt in einer dreidimensionalen Darstellung einen Isolieraufsatz 1. Ein solcher Isolieraufsatz wird auch als Isoliertülle bzw. Isolationstülle bezeichnet. Dieser Isolieraufsatz 1 weist ein im Wesentlichen hohlzylinderförmiges Isolierrohr 3 auf, an dessen einer Stirnfläche eine Platte 5 angeordnet ist, welche senkrecht zur Mittelachse des Isolierrohres 3 ausgerichtet ist. Eine Durchgangsöffnung 7 des Isolieraufsatzes 1 erstreckt sich durch das Isolierrohr 3 und weiter durch eine Öffnung der Platte 5. Im montierten Zustand durchgreift ein zu isolierender Kontaktarm die Durchgangsöffnung des Isolieraufsatzes 1, d.h. der Kontaktarm durchgreift sowohl die Öffnung der Platte 5 als auch den hohlen Innenraum des Isolierrohres 3.

Die Platte 5 trägt Isolierstege 9 des Isolieraufsatzes, wobei diese Isolierstege 9 die Durchgangsöffnung ununterbrochen umlaufen, also in sich geschlossen sind. Zwischen den beiden Isolierstegen 9 ist eine umlaufende Nut 10 angeordnet, welche ebenfalls ohne Unterbrechungen die Durchgangsöffnung 7 umgreift. Weiterhin sind zwei hakenförmige Rastelemente 11 dargestellt, welche in axialer Richtung der Durchgangsöffnung von der Platte 5 abstehen und im Wesentlichen parallel zu den Isolierstegen 9 ausgebildet sind. An ihrem Ende tragen diese Rastelemente 11 einen Schnapphaken, der im montierten Zustand des Isolieraufsatzes hinter eine Wandung eines Isoliergehäuses greift und dadurch den Isolieraufsatz lösbar mit dem Isoliergehäuse verbindet. Jeder der Isolierstege 9 weist zwei halbkreisförmige Isolierstegabschnitte (in der Figur 1 oben bzw. unten dargestellt) sowie zwei gerade Isolierstegabschnitte auf, welche die halbkreisförmigen Isolierstegabschnitte miteinander verbinden. Die Isolierstege 9 haben also jeweils eine gestreckt-ovale o.ä. Form.

Die Öffnung 7 befindet sich nicht im Zentrum der Fläche zwischen den Isolierstegen 9, vielmehr ist die Mitte der Öffnung 7 und damit die Mitte der Durchgangsöffnung des Isolieraufsatzes 1 zu einem der halbkreisförmigen Isolierstegabschnitte (hier zu dem unteren halbkreisförmigen Isolierstegabschnitt hin) verschoben, d. h. der Abstand der Mitte der Durchgangsöffnung des Isolieraufsatzes 1 zu dem unten dargestellten halbkreisförmigen Isolierstegabschnitt ist kleiner als der Abstand der Mitte der Durchgangsöffnung zu dem anderen (in der Figur 1 oben dargestellten) halbkreisförmigen Isolierstegabschnitt.

Im Ausführungsbeispiel ist der Isolieraufsatz 1 einstückig ausgebildet und besteht aus einem isolierenden Kunststoff, beispielsweise aus einem Thermoplast mit oder ohne Glasfaseranteil. Der Isolieraufsatz lässt sich kostengünstig beispielsweise durch Gießen oder Spritzen herstellen.

In Figur 2 ist eine Schnittdarstellung des Isolieraufsatzes 1 dargestellt. Besonders deutlich ist hier zu erkennen, dass das Rastelement 11 länger ausgestaltet ist als die Höhe der Isolierstege 9. Folglich ragt dieses Rastelement 11 über die Isolierstege 9 hinaus und durchgreift im montierten Zustand eine Wandung des Isoliergehäuses, auf dem der Isolieraufsatz aufgesetzt wird. Auf der dem Betrachter abgewandten Seite, also in Figur 2 nicht sichtbar, trägt das Rastelement 11 eine Rastnase, welche hinter der Wandung des Isoliergehäuses einrastet.

In Figur 3 ist ein Teil eines Isoliergehäuses 20 mit zwei nebeneinander liegenden Aufnahmen für jeweils einen Isolieraufsatz dargestellt. Im Inneren des Isoliergehäuses 20 ist eine Stromschiene 22 zu erkennen, welche mit einem Kontaktarm 24 leitend verbunden ist. Der Kontaktarm 24 durchdringt eine Durchgangsöffnung in der Wand des Isoliergehäuses 20 und steht senkrecht nach außen von der Wand des Isoliergehäuses 20 ab. Das Isoliergehäuse 20 weist einen ununterbrochen umlaufenden, in sich geschlossenen Isoliersteg 26 auf, welcher die Durchgangsöffnung des Isoliergehäuses 20 umläuft. An diesen Isoliersteg 26 grenzen beidseitig Nuten 28 an. Diese Nuten 28 laufen ebenfalls ununterbrochen um die Durchgangsöffnung des Isoliergehäuses 20 herum. Die jeweils dem Isoliersteg 26 abgewandte Seite der Nuten 28 wird begrenzt durch Wandmaterial des Isoliergehäuses 20.

Ähnlich den Isolierstegen 9 des Isolieraufsatzes 1 weist der Isoliersteg 26 des Isoliergehäuses 20 zwei halbkreisförmige Isolierstegabschnitte (in der Figur 3 im oberen bzw. unteren Teil dargestellt) und zwei gerade Isolierstegabschnitte auf, wobei die geraden Isolierstegabschnitte die halbkreisförmigen Isolierstegabschnitte miteinander verbinden. Ebenso wie beim Isolieraufsatz 1 ist der Abstand der Mitte der Durchgangsöffnung durch das Isoliergehäuse zu dem einen (in Figur 3 unten dargestellten) halbkreisförmigen Isolierstegabschnitt kleiner als der Abstand der Mitte der Durchgangsöffnung zu dem anderen (oben dargestellten) halbkreisförmigen Isolierstegabschnitt.

Wenn der in Figur 1 dargestellte Isolieraufsatz 1 auf das in Figur 3 dargestellte Isoliergehäuse 20 aufgesetzt wird, dann wird der Kontaktarm 24 durch die Öffnung 7 der Platte 5 des Isolieraufsatzes 1 hindurch ins Innere des Isolierrohres 3 eingeführt. Die Isolierstege 9 des Isolieraufsatzes 1 greifen in die Nuten 28 des Isoliergehäuses 20 ein. Das Rastelement 11 durchgreift eine in Figur 3 dargestellte Durchgangsöffnung in der Wandung des Isoliergehäuses 20. Der an der Spitze des Rastelementes 11 angeordnete Rasthaken verrastet auf der Rückseite der Wandung des Isoliergehäuses 20, wodurch eine feste, jedoch lösbare Verbindung des Isolieraufsatzes 1 mit dem Isoliergehäuse 20 entsteht. Zwischen dem Isolieraufsatz 1 und dem Isoliergehäuse 20 entsteht dabei eine Fuge mit mäanderförmigem (schlangenförmigem geschlängeltem, gewundenem) Querschnitt, welche gut in den Figuren 4 bis 6 zu erkennen ist.

In Figur 4 ist ein weiteres Ausführungsbeispiel eines Isoliergehäuses 40 mit einem aufgesetzten Isolieraufsatz 42 dargestellt. Im Inneren des Isoliergehäuses 40 eines Schaltgerätes befindet sich eine Stromschiene 44, die leitend mit einem Kontaktarm 46 verbunden ist. Der Kontaktarm 46 ragt aus dem Isoliergehäuse 40 heraus und durchdringt eine Durchgangsöffnung des aufgesetzten Isolieraufsatzes 42. Am Ende des Kontaktarms 46 ist ein als solches bekannter sog. Stecktulpen-Kontakt 48 dargestellt, auf dessen Einzelheiten hier nicht weiter eingegangen wird.

In Figur 4 ist besonders gut zu erkennen, wie Isolierstege 50 des Isolieraufsatzes 42 in die Nuten des Isoliergehäuses 40 derart eingreifen, dass zwischen dem Isolieraufsatz 42 und dem Isoliergehäuse 40 eine Fuge mit mäanderförmigem Querschnitt gebildet wird. Die Fuge zeigt einen labyrinthartigen Verlauf. In Fig. 4 ist auch zu erkennen, dass die Nut des Isolieraufsatzes 42 ausgebildet ist zur Aufnahme eines Isoliersteges 52 des Isoliergehäuses 40. Der Isoliersteg 52 des Isoliergehäuses 40 ist also ausgebildet zum Eingreifen in die Nut des Isolieraufsatzes 42 derart, dass zwischen dem Isoliergehäuse 40 und dem Isolieraufsatz 42 die Fuge mit mäanderförmigem Querschnitt gebildet wird. Ebenso sind die Nuten des Isoliergehäuses 40 ausgebildet zur Aufnahme der Isolierstege 50 des Isolieraufsatzes 42. Der Isoliersteg 52 des Isoliergehäuses 40 ist also komplementär ausgebildet zur Nut des Isolieraufsatzes 42. Generell korrespondieren die Isolierstege jeweils mit den Nuten, in die sie eingreifen. Mit anderen Worten sind die Isolierstege komplementär ausgebildet zu den Nuten, in die sie eingreifen.

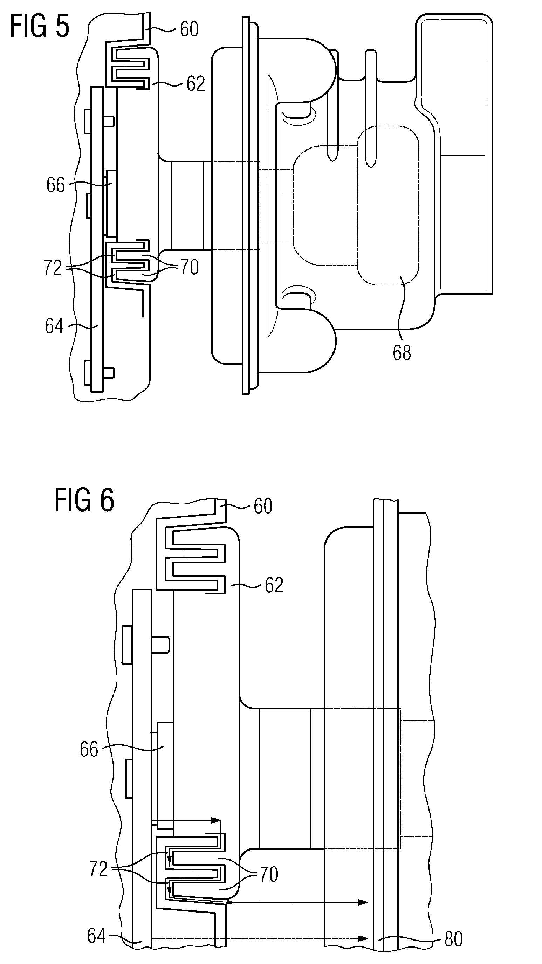

Figur 5 zeigt ein weiteres Ausführungsbeispiel eines Isoliergehäuses 60 mit einem aufgesetzten Isolieraufsatz 62. Im linken Teil der Figur ist eine Stromschiene 64 zu erkennen, die mit einem Kontaktarm 66 elektrisch verbunden ist. Der Kontaktarm 66 durchdringt eine Durchgangsöffnung des Isolieraufsatzes 62 und endet in einem im rechten Teil der Figur 5 dargestellten Steckkontakt 68, dessen genauer Aufbau hier nicht weiter von Belang ist.

Im linken Teil der Figur 5 ist gut zu erkennen, wie Isolierstege 70 des Isolieraufsatzes 62 in Nuten 72 des Isoliergehäuses 60 eingreifen. Hierbei ist ebenfalls gut zu erkennen, dass weder die Isolierstege 70 des Isolieraufsatzes 62 noch die Nuten 72 des Isoliergehäuses 60 besonders exakt gearbeitet zu sein brauchen, vielmehr ist eine vergleichsweise grobe Ausarbeitung der Isolierstege und Nuten ausreichend. Ebenso ist zu erkennen, dass in einer mäanderförmigen Fuge zwischen Isoliergehäuse 60 und Isolieraufsatz 62 durchaus Luftspalte vorhanden sein dürfen - es ist also im Gegensatz zu einer sogenannten Edelfuge keine präzise Ausarbeitung der aneinandergrenzenden Flächen des Isoliergehäuses und des Isolieraufsatzes notwendig.

Im Vergleich der Figuren 4 und 5 ist gut zu erkennen, dass der beschriebene Isolieraufsatz vielseitig bzw. universell eingesetzt werden kann.

Beim Gegenstand der Figur 4 ist der Isolieraufsatz 42 so auf das Isoliergehäuse 40 aufgesetzt, dass die exzentrisch angeordnete, vom Kontaktarm durchgriffene Öffnung des Isolieraufsatzes 42 sich im oberen Teilbereich des Isolieraufsatzes nahe den oberen halbkreisförmigen Isolierstegabschnitten der umlaufenden Isolierstege 50, 52 befindet.

Beim Gegenstand der Figur 5 dagegen wurde der Isolieraufsatz 62 so auf das Isoliergehäuse 60 aufgesetzt, dass sich die exzentrische Öffnung des Isolieraufsatzes 62 im unteren Teilbereich des von dem Isoliersteg des Isoliergehäuses 60 eingefassten Bereichs befindet. Mit anderen Worten wurde der Isolieraufsatz bei der Figur 5 um 180° um die Achse der Durchgangsöffnung verdreht auf das Isoliergehäuse aufgesetzt im Vergleich zur Figur 4.

In Figur 6 ist schematisch mittels durchgezogen dargestellter Pfeile die Länge einer Luftstrecke dargestellt, welche sich ausgehend von der Stromschiene 64 durch die mäanderförmige Fuge zwischen dem Isoliergehäuse 60 und dem Isolieraufsatz 62 hindurch bis zu einem weiteren elektrisch leitenden Bauteil 80 (beispielsweise einer metallischen Rückwand eines weiteren Schaltgerätes oder einem sogenannten Shutter eines Schaltschrankes) ergibt. Im Vergleich dazu ist mit einem unten dargestellten geradlinigen, gestrichelt dargestellten Pfeil die Länge einer Luftstrecke dargestellt, die sich zwischen der Stromschiene 64 und dem elektrisch leitenden Bauteil 80 ergeben würde, wenn das Isoliergehäuse 60 und der Isolieraufsatz 62 mit einer einfachen, geradlinig verlaufenden Fuge verbunden wären. Die erhebliche Verlängerung der Luftstrecke im Falle der Fuge mit mäanderförmigem Querschnitt ist offensichtlich.

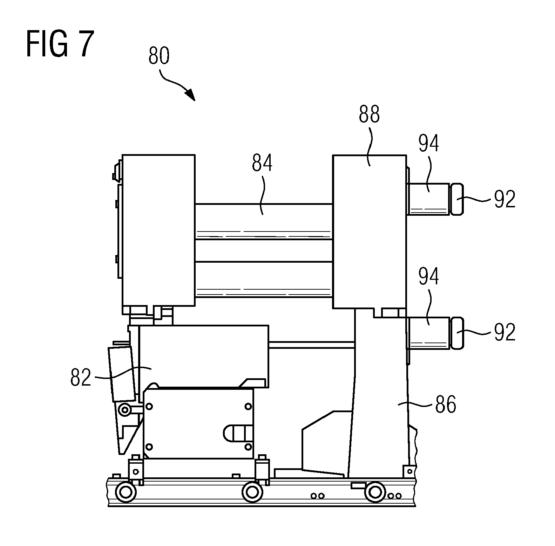

In Figur 7 ist ein Beispiel einer Anwendung für den beschriebenen Isolieraufsatz und das beschriebene Isoliergehäuse dargestellt. Figur 7 zeigt ein Schaltgerät in Form einer Schütz-Sicherungs-Kombination 80. Dieses Schaltgerät 80 weist ein Schütz 82 sowie Hochspannungs-Hochstromsicherungen 84 (sogenannte HH-Sicherungen) auf. Eine Traverse 86 trägt ein Isoliergehäuse 88 (einen sog. Isolationskasten), aus dem Kontaktarme hervorstehen, welche mit Stecktulpenkontakte 92 tragen. Auf die Kontaktarme sind Isolieraufsätze 94 der in den Figuren 1 und 2 dargestellten Art aufgesetzt; zwischen den Isolieraufsätzen 94 und dem Isoliergehäuse 88 befindet sich - ähnlich wie in den Figuren 4 bis 6 dargestellt - eine Fuge mit mäanderförmigem Querschnitt.

Es wurde ein Isolieraufsatz, ein Isoliergehäuse sowie eine Anordnung mit einem Isolieraufsatz und einem Isoliergehäuse beschrieben, mit denen einfach und kostengünstig ein Kontaktarm eines Schaltgerätes oder ein anderer aus einem Isoliergehäuse herausragenden Kontaktarm elektrisch isoliert werden kann. Dabei wird vorteilhafterweise zwischen dem Isolieraufsatz und dem Isoliergehäuse eine Fuge ausgebildet, welche einen mäanderförmigen Querschnitt aufweist. Dadurch wird die Luftstrecke, die bei einem elektrischen Durchschlag überwunden werden muss, erheblich verlängert gegenüber einer Fuge mit einem nicht mäanderförmigen, geradlinigen Fugenquerschnitt. Insbesondere ist es bei dem erfindungsgemäßen Isolieraufsatz und dem Isoliergehäuse nicht notwendig, eine aufwendige und teure Edelfuge mit stofflicher oder gleichwertiger Pressverbindung zwischen Isolieraufsatz und Isoliergehäuse einzusetzen. Dadurch ergibt sich eine besonders einfache und kostengünstige Lösung.

## Patentansprüche

1. Isolieraufsatz (1) zum Isolieren eines Kontaktarms (24) eines Schaltgeräts, mit einer Durchgangsöffnung (7) zur Aufnahme des Kontaktarms (24) und mit die Durchgangsöffnung umlaufenden, in sich geschlossenen Isolierstegen (9), zwischen denen eine umlaufende Nut (10) angeordnet ist, wobei die Isolierstege (9) des Isolieraufsatzes ausgebildet sind zum Eingreifen in mindestens eine Nut (28) eines Isoliergehäuses (20) derart, dass zwischen dem Isolieraufsatz (1) und dem Isoliergehäuse (20) eine Fuge mit mäanderförmigem Querschnitt gebildet wird.

2. Isolieraufsatz nach Anspruch 1,
**dadurch gekennzeichnet, dass** die Nut (10) des Isolieraufsatzes (1) ausgebildet ist zur Aufnahme eines Isoliersteges (26) des Isoliergehäuses (20).

3. Isolieraufsatz nach Anspruch 1 oder 2,
**dadurch gekennzeichnet, dass** die Isolierstege (9) des Isolieraufsatzes (1) komplementär ausgebildet sind zur Nut (28) des Isoliergehäuses (20).

4. Isolieraufsatz nach einem der vorhergehenden Ansprüche,
**dadurch gekennzeichnet, dass** dieser einstückig ausgebildet ist und aus einem elektrisch isolierenden Kunststoff besteht.

5. Isolieraufsatz nach einem der vorhergehenden Ansprüche,
**dadurch gekennzeichnet, dass** die Isolierstege (9) des Isolieraufsatzes (1) zwei halbkreisförmige Isolierstegabschnitte und zwei gerade Isolierstegabschnitte aufweisen, wobei die geraden Isolierstegabschnitte die halbkreisförmigen Isolierstegabschnitte miteinander verbinden, und der Abstand der Mitte der Durchgangsöffnung (7) zu einem der halbkreisförmigen Isolierstegabschnitte kleiner ist als der Abstand der Mitte der Durchgangsöffnung (7) zu dem anderen halbkreisförmigen Isolierstegabschnitt.

6. Isolieraufsatz nach einem der vorhergehenden Ansprüche,
**gekennzeichnet durch** ein Rastelement (11) zum lösbaren Verbinden des Isolieraufsatzes (1) mit dem Isoliergehäuse (20).

7. Isolieraufsatz nach einem der vorhergehenden Ansprüche,
**dadurch gekennzeichnet, dass** dieser ein die Durchgangsöffnung (7) umgebendes Isolierrohr (3) und eine an einem Ende des Isolierrohrs (3) angeordnete, die Isolierstege (9) tragende Platte (5) aufweist.

8. Isoliergehäuse (20) mit einer Durchgangsöffnung zur Aufnahme eines Kontaktarms (24) und mit einem die Durchgangsöffnung umlaufenden, in sich geschlossenen Isoliersteg (26), an den beidseitig umlaufende Nuten (28) angrenzen, wobei der Isoliersteg (26) des Isoliergehäuses (20) ausgebildet ist zum Eingreifen in eine Nut (10) eines Isolieraufsatzes (1) derart, dass zwischen dem Isoliergehäuse (20) und dem Isolieraufsatz (1) eine Fuge mit mäanderförmigem Querschnitt gebildet wird.

9. Isoliergehäuse nach Anspruch 8,
**dadurch gekennzeichnet, dass** die Nuten (28) des Isoliergehäuses (20) ausgebildet sind zur Aufnahme von Isolierstegen (9) des Isolieraufsatzes (1).

10. Isoliergehäuse nach Anspruch 8 oder 9,
**dadurch gekennzeichnet, dass** der Isoliersteg (26) des Isoliergehäuses (20) komplementär ausgebildet ist zur Nut (10) des Isolieraufsatzes (1).

11. Isoliergehäuse nach einem der Ansprüche 8 bis 10,
**dadurch gekennzeichnet, dass** der Isoliersteg (26) des Isoliergehäuses (20) zwei halbkreisförmige Isolierstegabschnitte und zwei gerade Isolierstegabschnitte aufweist, wobei die geraden Isolierstegabschnitte die halbkreisförmigen Isolierstegabschnitte miteinander verbinden, und der Abstand der Mitte der Durchgangsöffnung zu einem der halbkreisförmigen Isolierstegabschnitte kleiner ist als der Abstand der Mitte der Durchgangsöffnung zu dem anderen halbkreisförmigen Isolierstegabschnitt.

12. Anordnung mit einem Isolieraufsatz nach einem der Ansprüche 1 bis 7 und einem Isoliergehäuse nach einem der Ansprüche 8 bis 11.
